# EUROPÄISCHE PATENTSCHRIFT

(11) **EP 3 927 997 B1**
(45) Veröffentlichungstag und Bekanntmachung des Hinweises auf die Patenterteilung: **16.10.2024**
(21) Anmeldenummer: 20702981.0
(22) Anmeldetag: 28.01.2020
(51) Int. Cl.: F16H 25/22

(54) **KUGELGEWINDETRIEB MIT VERDREHSICHERUNG**
BALL SCREW DRIVE WITH AN ANTI-ROTATION DEVICE
ENTRAÎNEMENT À VIS À BILLES AVEC DISPOSITIF D'ANTIROTATION

(30) Priorität: 19.02.2019 DE 102019104125
(43) Veröffentlichungstag der Anmeldung: 29.12.2021
(73) Patentinhaber: KNORR-BREMSE Systeme für Nutzfahrzeuge GmbH, 80809 München (DE)
(72) Erfinder: SCHALLER, Sebastian, 86462 Langweid (DE); GRÖSSL, Steffen, 81245 München (DE)
(86) Internationale Anmeldenummer: PCT/EP2020/052003
(87) Internationale Veröffentlichungsnummer: WO 2020/169309

(56) Entgegenhaltungen:
- EP-A1- 2 908 028
- WO-A1-2017/005258
- DE-A1- 102011 119 724

## Beschreibung

Die vorliegende Erfindung betrifft einen Kugelgewindetrieb mit einer Verdrehsicherung insbesondere für die Verwendung in einem automatisierten Schaltgetriebe (AMT) zur Umwandlung von rotatorischer in translatorische Bewegung.

Für die Betätigung von Kupplungen und Gängen in AMT Getrieben können elektrisch angetriebene Aktuatoren eingesetzt werden. Die von einem Elektromotor erzeugte rotatorische Ausgangsbewegung wird dabei in der Regel zunächst in einer Übersetzungsstufe übersetzt und anschließend in eine translatorische Bewegung umgewandelt. Für letzteren Schritt werden in der Praxis häufig Kugelgewindetriebe eingesetzt.

Diese bestehen in der Regel aus einer Spindel mit einem Laufrillenprofil, in dem Laufrillenprofil befindliche Kugeln und einer Mutter, die mithilfe der Kugeln mit wenig Reibung um die Spindel rotiert. Die Spindel gleitet dabei auf den Kugeln in dem Laufrillenprofil in ihrer Längsrichtung durch den Innendurchmesser der Mutter. Diese verfügt zudem über einen Kugelrückführsystem, das Kugeln an Stellen, an denen sie aufgrund der Bewegung von Mutter und Spindel aus der Kontaktfläche zwischen Mutter und Spindel heraus laufen würden, wieder zu Stellen rückgeführt werden, an denen Kugeln zur Reibungsminderung benötigt werden. Anders ausgedrückt sorgt es also dafür, dass sich immer Kugeln zwischen Mutter und Spindel befinden, um somit möglichst wenig Reibung zwischen Mutter und Spindel gewährleisten zu können. Weiterhin muss sichergestellt werden, dass sich die Spindel durch die Rotation der Mutter nicht mit dreht. Dies wird über eine Verdrehsicherung der Spindel erreicht. Die Verdrehsicherung wird meistens über einen Formschluss zwischen Spindel und Einhausung des Kugelgewindetriebes erreicht. Zur Umsetzung der Verdrehsicherung wird im Stand der Technik in der Regel ein Querbolzen in der Spindel vorgesehen, der über die Spindel in radialer Richtung hinausragt und in für ihn entsprechenden länglichen Nuten in der Einhausung entlang der Betätigungsrichtung geführt wird. Somit kann sich die Spindel zwar in Längsrichtung bewegen, ihr Rotationsfreiheitsgrad ist jedoch durch die Verdrehsicherung blockiert.

Das Patentdokument WO2017/005258 A1 offenbart eine Umsetzung einer Verdrehsicherung, in der ein Sicherungselement in Nuten einer Führungshülse mit einem geschlossenen Querschnittsprofil geführt wird. Die Führungshülse ist dabei als dünnes Blech ausgeführt und an einer Seite eingespannt und an der gegenüberliegenden Seite frei. Dadurch kann sich die Führungshülse im Falle einer Rotation des Sicherungselements leicht verdrehen, wodurch sie in Längsrichtung eine Torsion erfährt.

Die beschriebenen Umsetzungen haben allerdings den Nachteil, dass durch Toleranzen, unterschiedliche Reibpaarungen und ungleichmäßige Flächenpressung ein erheblicher Verschleiß zwischen Sicherungselement und Nut der Einhausung entsteht. Bereits geringes Spiel zwischen dem Sicherungselement und der Einhausung führt dazu, dass eine Rotationsbewegung der Mutter ebenfalls zu einer geringen Rotationsbewegung der Spindel führt, bis der Kontakt des Sicherungselementes mit der Einhausung die Rotationsbewegung der Spindel unterbindet.

Dieser Vorgang führt in der beschriebenen Anordnung des Standes der Technik dazu, dass die Kontaktfläche von Sicherungselement mit der Einhausung, genauer gesagt mit der Seitenfläche der Nut der Einhausung in der das Sicherungselement geführt wird, sehr gering ist, wodurch ein hoher Verschleiß sowohl der Seitenfläche der Nut als auch des Sicherungselements entsteht.

Es ist somit Aufgabe der vorliegenden Erfindung eine Lösung bereitzustellen, die den Verschleiß einer beschriebenen Anordnung verringert und somit längere Standzeiten der Bauteile und geringere Kosten für Wartungstätigkeiten zu erreichen.

Diese Aufgabe wird durch die erfindungsgemäßen Gegenstände der unabhängigen Ansprüche gelöst. Vorteilhafte Ausführungsformen sind in den Unteransprüchen enthalten.

Die Verdrehsicherung des erfindungsgemäßen Kugelgewindetriebes weist ein Sicherungselement auf, das an einem Bewegungselement angeordnet ist, welches dazu konfiguriert ist, sich entlang seiner Längsachse, also in Längsrichtung, zu bewegen und dabei keine Rotationsbewegung auszuführen. Das Sicherungselement ragt dabei an wenigstens einer Stelle aus der Oberfläche des Bewegungselements in radialer Richtung nach außen hinaus.

Weiterhin weist die Verdrehsicherung des erfindungsgemäßen Kugelgewindetriebes wenigstens ein Führungselement auf, welches wiederum mit einer Nut versehen ist. Als Nut wird dabei eine längliche Vertiefung im Führungselement bezeichnet, die jegliche Querschnittsformen aufweisen kann, und zur Aufnahme des Sicherungselements vorgesehen ist. Das wenigstens eine Führungselement mit der Nut ist dabei in einer Aussparung einer Einhausung des Bewegungselements derart angeordnet, dass die Nut im Wesentlichen parallel zur Längsachse des Bewegungselements liegt und den aus der Oberfläche des Bewegungselements hinausragenden Teil des Sicherungselements bei Längsbewegung des Bewegungselements führt. Erfährt das Bewegungselement ein Moment welches zu einer Rotation des Bewegungselements um die eigene Längsachse führen würde, wird diese Bewegung durch den Eingriff des Sicherungselements in der Nut des Führungselements unterbunden. Zudem weist das wenigstens eine Führungselement keinen offenen Freiheitsgrad entlang der Längsachse der Nut auf, aber wenigstens einen offenen Freiheitsgrad für eine Rotation um eine Achse parallel zur Längsachse der Nut.

Durch den offenen Rotationsfreiheitsgrad ist es dem Führungselement möglich sich je nach Rotation des Bewegungselements und damit des Sicherungselementes durch die von dem Sicherungselement ausgeübte Kraft auf das Führungselement an diesem auszurichten. Auf diese Weise wird erreicht, dass die Kontaktfläche zwischen Sicherungselement und Führungselement erhöht wird, wodurch der Verschleiß der beteiligten Bauteile verringert werden kann.

In einer vorteilhaften Ausführungsform und zur Realisierung einer Lösung mit einem möglichst geringen Bauraum ist das Sicherungselement an einem Ende beziehungsweise in einem Endbereich des Bewegungselements angeordnet. Auf diese Weise kann ein in axialer Richtung überstehender Abschnitt des Spindel vermieden werden und eine unnötige Vergrößerung des Bauraums der Vorrichtung insgesamt verhindert werden.

Weiterhin entspricht in einer vorteilhaften Ausführungsform die Anzahl der Führungselemente der Anzahl der Stellen an denen das wenigstens eine Sicherungselement aus der Oberfläche des Bewegungselements in radialer Richtung hinausragt. Der Vorteil dieser Ausführungsform ist, dass jedes zur Verdrehsicherung beitragende Ende des wenigstens einen Sicherungselements, jeweils ein Führungselement hat und dadurch eine optimale Ausrichtung des jeweiligen Führungselements gewährleistet werden kann. Auf der anderen Seite wird dadurch sichergestellt, dass lediglich die Anzahl der benötigten Führungselemente verbaut werden, was Bearbeitungsaufwand und Kosten spart.

In einer weiteren vorteilhaften Ausführungsform weist der Querschnitt der Nut des wenigstens einen Führungselements senkrecht zur Längsachse des Führungselements die gleiche Form auf, wie der Querschnitt senkrecht zur Längsachse des Bewegungselements durch den in die Nut des Führungselements hineinragenden Teil des Sicherungselements. Dabei können mehrere Stellen des Sicherungselements in die Nut hineinragen, sowie mehrere Sicherungselemente und Führungselemente vorgesehen sein.

In einer weiteren vorteilhaften Ausführungsform der Erfindung weist die Verdrehsicherung mindestens 2, bevorzugt gleichmäßig um das Bewegungselement angeordnete Führungselemente auf, um auf diese Weise die von dem wenigstens einen Führungselement aufzunehmende Kraft für jedes Führungselement wenigstens zu halbieren und somit den Verschleiß in jedem einzelnen Führungselement zu verringern.

Weiterhin vorteilhaft ist eine Ausführungsform des Sicherungselements als Bolzen. Dies bedeutet, dass der Querschnitt des wenigstens einen Sicherungselements senkrecht zur Längsachse des Sicherungselements an einer Stelle, an der das Sicherungselement in die Nut des Führungselements hineinragt, eine kreisförmige Form aufweist.

In einer weiteren vorteilhaften Ausführungsform ist das mindestens eine Führungselement an seinen Stirnflächen bzw. an seinen Enden in der Einhausung drehbar gelagert. Durch eine derartige Lagerung wird jede Bewegung des Führungselements in der Einhausung unterbunden, außer der Rotation um eine Achse, die durch die Lagerung definiert wird und parallel zur Längsachse des Bewegungselements verläuft. Eine derartige Ausführung hat den Vorteil, dass die Reibung zwischen Führungselement und Einhausung bei der Ausrichtung des Führungselements an dem Sicherungselement minimiert wird und somit der Verschleiß an den beteiligten Bauteilen verringert werden kann.

In einer weiteren vorteilhaften Ausführungsform der Erfindung ist das wenigstens eine Führungselement in der Aussparung der Einhausung derart angeordnet, dass eine Bewegung des Führungselements in seiner Längsrichtung auf der einen Seite durch den Anschlag an die Einhausung begrenzt ist und eine Bewegung des Führungselements in die entgegengesetzte Richtung durch einen Sicherungsring unterbunden wird, sodass keine Bewegungen in Längsrichtung des Führungselements möglich sind.

Weiterhin vorteilhaft ist eine Ausführungsform in der das Führungselement einen symmetrischen, bevorzugt kreisförmigen Querschnitt senkrecht zu seiner Längsachse aufweist. Insbesondere durch einen kreisförmigen Querschnitt kann eine geringe Baugröße und einfache Umsetzung der Erfindung garantiert werden.

In einer weiteren vorteilhaften Ausführungsform haben das Führungselement und die Aussparung der Einhausung, in der das Führungselement untergebracht ist, die gleiche Querschnittsform senkrecht zur Längsachse des Führungselements. Solch eine Ausführung beansprucht somit keinen größeren Bauraum als Verdrehsicherungen nach dem Stand der Technik.

In einer weiteren vorteilhaften Ausführungsform weist die Nut des wenigstens einen Führungselements einen symmetrischen Querschnitt in Längsrichtung der Nut auf.

Darüber hinaus ergeben in einer vorteilhaften Ausführungsform das Material des wenigstens einen Führungselements und das Material des wenigstens einen Sicherungselements eine Materialpaarung, die bei Reibung zwischen den Materialien einen geringen Verschleiß und/oder einen geringen Reibwiderstand aufweist. Das Material des wenigstens einen Führungselements ist dabei bevorzugt aus einem harten Material wie beispielsweise einem harten Stahl. Auf diese Weise kann ein erhöhter Verschleiß der Nut und des wenigstens einen Sicherungselements vermieden und geringer Wartungsaufwand sichergestellt werden.

Weiterhin vorteilhaft ist eine Ausführungsform der Erfindung in der das Ende des Sicherungselements soweit in die Nut hineinragt, dass der Punkt des Sicherungselements, der mit einer der Seitenflächen der Nut bei einer Drehung des Sicherungselements durch eine Drehung des Bewegungselements in Kontakt kommt, weiter entfernt ist von der Oberfläche der Spindel als der Mittelpunkt des Querschnitts des Führungselements senkrecht zu dessen Längsachse.

Der erfindungsgemäße Kugelgewindetrieb weist eine Spindel mit einem Laufrillenprofil und einem definierten Außendurchmesser und eine Mutter mit definiertem Innendurchmesser, der geringfügig größer ist als der Außendurchmesser der Spindel auf. Des Weiteren enthält er mindestens zwei Kugeln, die zwischen der Mutter und der Spindel in deren Laufrillenprofil angeordnet sind, um eine reibungsarme Bewegung zwischen der Spindel und der Mutter zu ermöglichen. In dieser Anordnung bewegt sich die Spindel in Längsrichtung, wenn die Mutter um die Spindel rotiert. Dabei liegen die Längsachsen der Mutter und der Spindel übereinander und die Mutter rotiert ohne Bewegung in Längsrichtung um die Spindel.

Um eine rotatorische Bewegung der Spindel zu verhindern, ist der erfindungsgemäße Kugelgewindetrieb mit einer Verdrehsicherung versehen, wobei die Spindel des Kugelgewindetriebs das Bewegungselement der Verdrehsicherung ist. Das Sicherungselement, welches auf der Spindel angeordnet ist, greift also mit seinen überstehenden Enden in die Nut des der Spindel gegenüber angeordneten Führungselementes ein und wird darin geführt. Das Führungselement ist dabei wie oben beschrieben in einer Einhausung der Spindel angeordnet.

Ein weiterer erfindungsgemäßer Kugelgewindetrieb stellt die kinematische Umkehr des oben erläuterten Kugelgewindetriebs dar. In einer solchen Ausführungsform rotiert die Spindel um die eigene Längsachse, ohne sich in axialer Richtung zu bewegen. Dadurch erfährt die Mutter eine axiale, also translatorische Bewegung, wozu in diesem Fall ihre Rotation unterbunden werden muss. Die Verdrehsicherung ist somit also an der Mutter vorgesehen wodurch diese in diesem Kugelgewindetrieb das Bewegungselement der Verdrehsicherung darstellt. Das wenigstens eine Führungselement mit der Nut in der das Sicherungselement geführt wird, ist folglich gegenüber der Mutter in der Einhausung des Kugelgewindetriebs dieser Ausführungsform angeordnet. Somit kann das Sicherungselement in der Nut des Führungselementes bei translatorischer Bewegung geführt werden und eine Rotation der Mutter wird verhindert.

Im Folgenden wird die Erfindung anhand von Figuren näher erläutert. Die Figuren zeigen im Einzelnen:
- **Fig. 1**: Prinzipskizze des Aufbaus einer Ausführungsform des erfindungsgemäßen Kugelgewindetriebes
- **Fig. 2**: Querschnittsansicht durch das Sicherungselement der Spindel, die Spindel selbst und zweier Führungselemente der Ausführungsform aus Figur 1
- **Fig. 3**: Detailansicht der Querschnittsansicht aus Figur 2 zur Darstellung des Funktionsprinzips des erfindungsgemäßen Kugelgewindetriebs
- **Fig. 4**: weitere Detailansicht der Figur 2 zur Darstellung des Funktionsprinzips zur Ausrichtung des Führungselements.
- **Fig. 5**: schematische Darstellung zur Erläuterung einer weiteren Ausführungsform eines erfindungsgemäßen Kugelgewindetriebs mit Verdrehsicherung

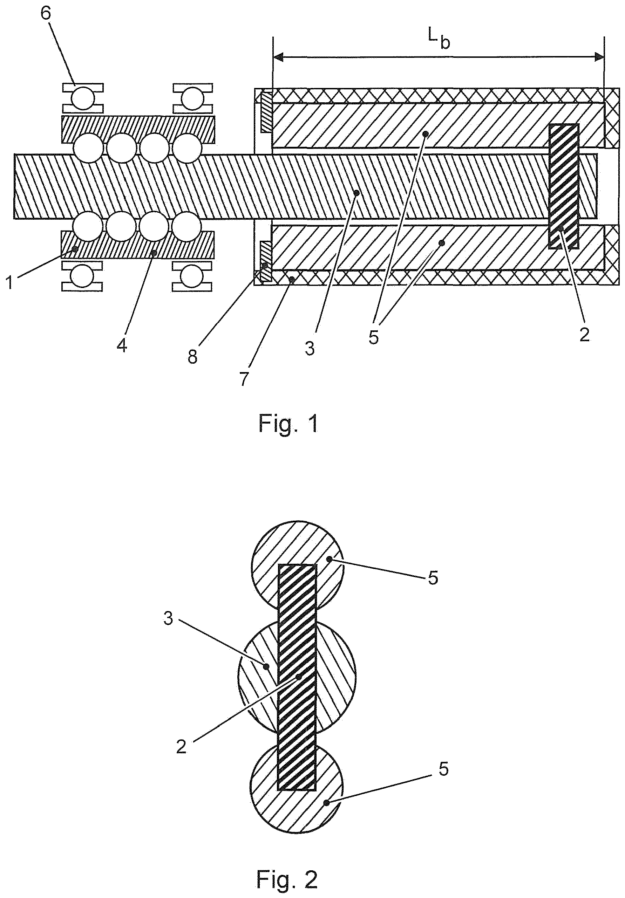

**Fig. 1** zeigt eine Prinzipskizze des Aufbaus einer Ausführungsform des erfindungsgemäßen Kugelgewindetriebes mit einer erfindungsgemäßen Verdrehsicherung. Die zentralen Bauteile des Kugelgewindetriebes 1 stellen die Spindel 3 und die um die Längsachse der Spindel rotierende Mutter 4 dar. Zwischen Mutter und Spindel sind dabei Kugeln angeordnet, um eine möglichst reibungsarme Rotation der Mutter 4 zu gewährleisten. Die Kugeln werden dabei in einem in der Figur 1 nicht dargestellten Laufrillenprofil in der Spindel 3 geführt. Die Mutter 4 ist an ihrem Außendurchmesser durch die Kugellager 6 rotatorisch gelagert, sodass eine Drehbewegung der Mutter 4 um die Spindel 3 möglich ist, eine Bewegung der Mutter 4 in Längsrichtung der Spindel 3 allerdings verhindert wird.

Wird die Mutter 4 durch z.B. einem Elektromotor (nicht dargestellt) in Rotation versetzt, wird die rotatorische Bewegung der Mutter 4 durch die in dem Laufrillenprofil der Spindel 3 geführten Kugeln in eine translatorische Bewegung (in Zeichenebene nach rechts bzw. links) der Spindel 3 umgesetzt. Da die Kugeln durch die Rotationsbewegung der Mutter 4 und der dadurch hervorgerufenen translatorischen Bewegung der Spindel 3 entlang des Laufrillenprofils aus dem Bereich zwischen Mutter 4 und Spindel 3 herauswandern würden, müssen die Kugeln vom einen Ende der Mutter 4 an das andere Ende zurückgeführt werden. Dies geschieht über ein nicht dargestelltes und im Stand der Technik bekanntes Rückführsystem innerhalb der Mutter 4.

Um eine Rotation der Spindel 3 durch die dynamische Drehung der Mutter 4 zu verhindern, ist es notwendig die Drehbewegung der Spindel 3 durch eine Verdrehsicherung zu unterbinden. Die Verdrehsicherung besteht in der in Figur 1 dargestellten Ausführungsform aus drei Bauteilen. Zum einen ist am Ende der Spindel 3, welche hier als Bewegungselement zu verstehen ist, ein Sicherungselement 2 vorgesehen, welches senkrecht zur Längsachse der Spindel 3 angeordnet ist. Das Sicherungselement 2 weist weiterhin einen kreisförmigen Querschnitt in einer Schnittrichtung senkrecht zur Längsachse des Sicherungselements 2 auf. Es ist somit als zylindrische Bolzen zu beschreiben der senkrecht auf die Längsachse der Spindel 3 steht. Zudem ragt der Bolzen mit beiden Enden deutlich aus der Oberfläche der Spindel 3 in radialer Richtung nach außen hinaus. Die Stirnflächen des Bolzens sind in dieser Ausführungsform als ebene Flächen ausgeführt.

Bei den anderen beiden Bauteilen der Verdrehsicherung handelt es sich um Führungselemente 5, die direkt gegenüberliegend, in Zeichnungsebene oberhalb und unterhalb der Spindel 3, parallel zur Längsachse der Spindel 3 angeordnet sind. Wie die Spindel 3 und das Sicherungselement 2 weisen auch die Führungselemente 5 einen kreisförmigen Querschnitt auf und können somit als Zylinder mit ebenen Stirnflächen beschrieben werden.

An der jeweils der Spindel 3 zugewandten Seite weisen die beiden Führungselement 5 eine Nut auf (in Fig. 1 nicht dargestellt), welche jeweils die Enden des Sicherungselements 2 aufnehmen. Die Nuten sind dabei derart in den Führungselementen 5 angeordnet, dass bei einer translatorische Bewegung der Spindel 3 nach links (in Zeichenebene), die Spindel 3 über das Sicherungselement 2 in den Nuten über die gesamte Betätigungslänge L_{b} geführt und eine Rotation der Spindel 3 vermieden werden kann. Zudem entsprechen die Querschnittsformen der Nuten den jeweils zu führenden Enden des Sicherungselements 3, sodass die Querschnitte der Nuten möglichst vollständig von den Enden des Sicherungselements 2 ausgefüllt sind, ohne dabei die translatorische Bewegung des Sicherungselements 2 entlang der Nuten zu behindern.

Die Führungselemente 5 sind ihrerseits jeweils in einer Aussparung einer Einhausung 8 des Kugelgewindetriebs 1 angeordnet. Dabei weisen die Aussparungen und die Führungselemente 5 die gleiche Querschnittsform senkrecht zur Längsachse der Führungselemente 5 auf. Es ist zu beachten, dass der Radius des beschriebenen Querschnitts der Führungselemente 5 geringfügig kleiner ist als der Radius der Querschnitte der jeweiligen Aussparungen. Eine Bewegung in Längsrichtung wird auf der einen Seite durch den Anschlag der Führungselemente 5 an der Einhausung 8 (in Zeichenebene rechte Seite) und auf der anderen Seite durch einen Sicherungsring 9 (in Zeichenebene linke Seite) begrenzt. Somit können sich die Führungselemente 5 in ihren Aussparungen um ihre Längsachsen drehen, während eine translatorische Bewegung der Führungselemente in Längsrichtung nicht möglich ist.

Fig. 2 zeigt eine Querschnittsansicht der Ausführungsform des Kugelgewindetriebs aus Fig. 1. Der Schnitt verläuft dabei auf Höhe des Sicherungselements, sodass die Spindel 3, dass Sicherungselement 2 und die beiden Führungselemente 5 gezeigt werden. Zu erkennen sind dabei die kreisförmigen Querschnitte der Spindel 3 und der beiden Führungselemente 5. Das Sicherungselement 2 greift dabei mit den jeweiligen Enden in die Nut des Führungselements 5 ein. Die Bewegung der Spindel und damit des Sicherungselements 2 verläuft in dieser Ansicht in die Zeichenebene hinein bzw. aus ihr heraus.

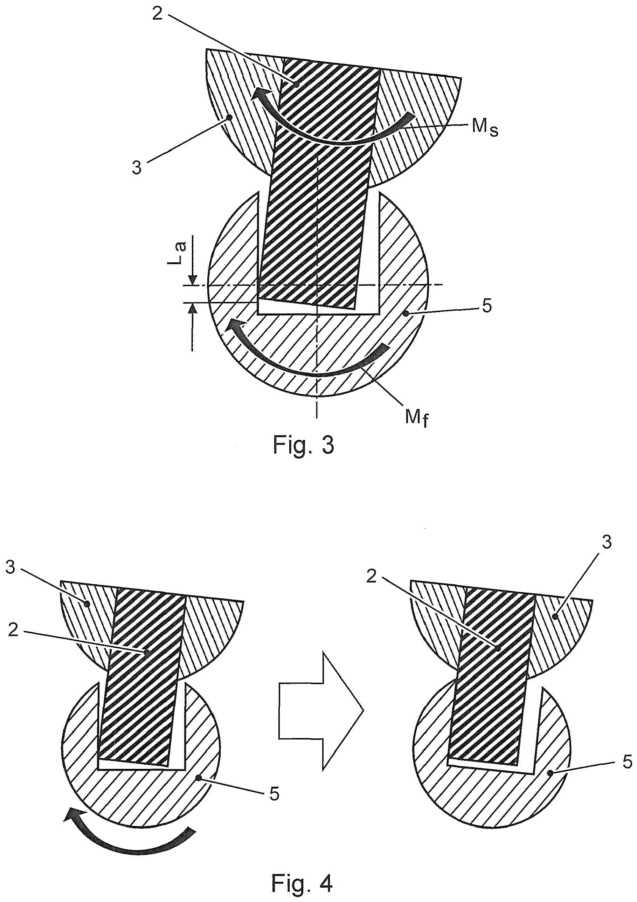

**Fig. 3** zeigt eine Detailansicht der Querschnittsansicht aus Figur 2, wobei lediglich das untere Führungselement 5 und der untere Teil der Spindel 3 und des Sicherungselements 2 betrachtet werden. Es wird darauf hingewiesen, dass um das Prinzip der Erfindung besser erklären zu können die Nut des Führungselements 5 deutlich größer dargestellt wurde als das Ende des Sicherungselement 2, sodass zwischen der Nut und dem Sicherungselement 2 ein deutliches Spiel zu sehen ist.

Die Spindel 3 und damit auch das Sicherungselement 2 weisen einen leichten Verdrehwinkel in Relation zum Führungselement 5 auf. Dieser resultiert aus einer leichten Rotation der Spindel 3, die durch das Drehmoment Mₛ hervorgerufen wurde, welches wiederum durch die Rotation der Mutter 4 auf die Spindel 3 wirkt. Da die Nut einen größeren Querschnitt aufweist als das Sicherungselement 2 im Bereich der Nut, kann sich das Ende des Sicherungselements 2 zunächst in der Nut bewegen. Ab einem gewissen Verdrehwinkel kommt das Sicherungselement mit einer Seitenfläche der Nut in Kontakt (dargestellter Zustand). Der Kontaktpunkt des Endes des Sicherungselements 2 liegt dabei in Zeichnungsebene unterhalb von dem Mittelpunkt des im Wesentlichen kreisförmigen Querschnitts des Führungselements 5. Dies ist in Figur 3 durch den Abstand Lₐ zwischen dem Mittelpunkt des Querschnitts des Führungselementes und dem Berührungspunkt zwischen Nut und Sicherungselement 2 gekennzeichnet.

Nach dem Kontakt des Sicherungselements mit dem Führungselement wird nun das Moment Mₛ auf das Führungselement 5 übertragen. Da sich dieses in der Aussparung der Einhausung (nicht dargestellt in Fig. 3) in Zeichenebene leicht bewegen und insbesondere drehen kann führt das Moment Mₛ des Sicherungselementes 2 zu einem Moment Mf des Führungselementes 5, was insbesondere eine Drehung des Führungselements 5 in der Aussparung zur Folge hat.

**Fig 4** zeigt die Ausrichtung des Führungselements 5 in Folge des Moments Mf. Die linke Darstellung zeigt die in Figur 3 bereits beschriebene Situation. Das Sicherungselement 2 ist mit einer Seitenfläche der Nut in Kontakt, sodass das Moment Mₛ auf das Führungselement 5 übertragen wird und das Moment Mf hervorruft. Dieses führt anschließend zu einer Drehung des Führungselements 5 um eine Achse parallel zu dessen Längsachse. Die Folge ist, dass sich das Führungselement 5 derart ausrichtet, dass das Sicherungselement 2 mit seiner gesamten Seitenfläche, welche sich innerhalb der Nut befindet, mit der Seitenfläche der Nut in Kontakt steht.

In dieser Stellung kann das Moment Mₛ nicht weiter an das Führungselement 5 übertragen werden, wodurch das Moment M_{f} nicht länger auf das Führungselement 5 wirkt. Die Rotation des Führungselements 5 stoppt demnach und das Führungselement 5 hat seine Endlage erreicht.

In dieser Endlage ist im Vergleich zur in der linken Darstellung gezeigten Position ein Linienkontakt statt eines punktförmigen Kontakts zwischen Sicherungselement 2 und Führungselement 5 entstanden. Die über das Moment Mₛ des Sicherungselements 2 einwirkende Kraft verteilt sich somit auf einen größeren Bereich als in der linken Darstellung der Figur 4.

Bei herkömmlichen Lösungen nach dem Stand der Technik wird, wie eingangs beschrieben, ein Sicherungselement in einer Nut in der Einhausung des Kugelgewindetriebs geführt. Die Lösung nach dem Stand der Technik ist somit durch die linke Darstellung der Figur 4 repräsentiert. Durch das Ausrichten des Führungselements 5 (vgl rechte Darstellung) und die damit einhergehende Krafteinleitung in das Führungselement 5 beziehungsweise die Einhausung (nicht dargestellt in Fig. 4) über die größere Auflagefläche des Sicherungselements 2 an der Seitenfläche der Nut, kann ein geringerer Verschleiß zwischen Sicherungselement 2 und Führungselement 5 erzielt werden und eine Verdrehung der Spindel trotzdem sicher gestellt werden.

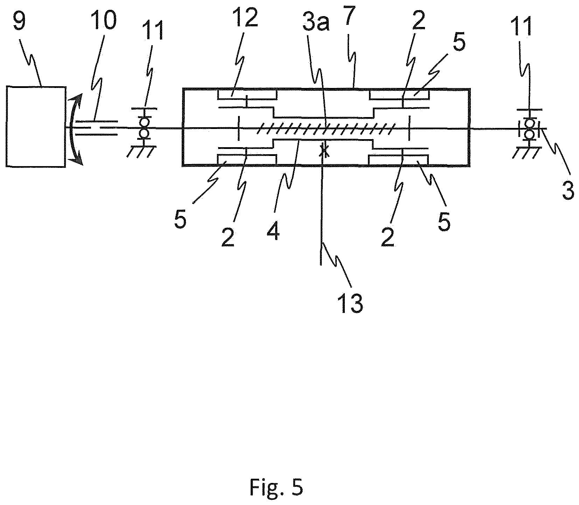

**Fig. 5** zeigt eine schematische Darstellung eines weiteren erfindungsgemäßen Kugelgewindetriebs mit Verdrehsicherung. Die in Fig. 5 gezeigte Ausführungsform stellt die kinematische Umkehr der Ausführungsform gemäß Fig. 1 dar.

Eine Antriebsvorrichtung 9 ist über eine Kupplung 10 mit einer Spindel 3 verbunden. Diese weist zumindest auf einem Teil ihres Umfangs ein Laufrillenprofil 3a auf und ist über die Lager 11 rotatorisch gelagert. Eine Mutter 4 befindet sich über in dem Laufrillenprofil 3a eingesetzte Kugeln (nicht dargestellt) mit der Spindel im Eingriff. Die Spindel 3 durchdringt dabei die Mutter 4, wie auch in der oben ausgeführten Ausführungsform, wobei die beiden Bauteile koaxial zueinander orientiert sind. Die Mutter ist zudem derart gelagert, dass sie eine translatorische Bewegung entlang der Längsrichtung der Spindel 3 durchführen kann. Durch die Verdrehsicherung 12, die an beiden axialen Enden der Mutter angeordnet ist, wird eine Rotation der Mutter 4 unterbunden. Die erfindungsgemäße Verdrehsicherung besteht wie oben beschrieben aus einem Sicherungselement 2 und einem Führungselement 5, wobei das Sicherungselement 2 in eine Nut des Führungselements 5 eingreift. Die Mutter 4 ist weiterhin mit einem Betätigungselement 13 verbunden. Führungselement und Nut sind wie im Kugelgewindetrieb der Ausführungsform gemäß Figur 1 gegenüberliegend vom Sicherungselement in einer Aussparung der Einhausung 7 angeordnet.

Die Funktionsweise des Kugelgewindetriebes lautet wie folgt. Wird durch die Antriebsvorrichtung 9 eine Antriebsbewegung (Rotation) über die Kupplung 10 auf die Spindel 3 ausgeübt, so wird die Spindel in eine Drehbewegung versetzt. Der über die Kugeln zwischen Mutter 4 und Spindel 3 erreichte Formschluss führt dazu, dass die Mutter sich in einer axialen Richtung translatorisch bewegen kann, während durch die Verdrehsicherung 12 eine Rotationsbewegung der Mutter 4 verhindert werden kann. Somit kann das Betätigungselement parallel zu einer Längsachse der Spindel 3 bewegt werden.

### BEZUGSZEICHENLISTE

- 1: Kugelgewindetrieb
- 2: Sicherungselement
- 3: Spindel
- 3a: Laufrillenprofil
- 4: Mutter
- 5: Führungselement
- 6: Kugellager
- 7: Einhausung
- 8: Sicherungsring
- 9: Antriebsvorrichtung
- 10: Kupplung
- 11: Lager
- 12: Verdrehsicherung
- 13: Betätigungselement
- L_{b}: Betätigungslänge
- Mₛ: auf die Spindel wirkendes Drehmoment
- M_{f}: auf Führungselement wirkendes Drehmoment

## Patentansprüche

1. Kugelgewindetrieb mit Verdrehsicherung aufweisend:
eine Spindel (3) mit Laufrillenprofil und definiertem Außendurchmesser,
eine Mutter (4) mit definiertem Innendurchmesser, der geringfügig größer ist als der Außendurchmesser der Spindel (3),
wenigstens zwei Kugeln, die zwischen der Mutter (4) und der Spindel (3) in deren Laufrillenprofil angeordnet sind und dazu konfiguriert sind, eine reibungsarme Bewegung der Spindel (3) entlang der Längsrichtung der Mutter (4) zu ermöglichen,
wobei die Mittelachsen des Innendurchmessers der Mutter (4) und des Außendurchmessers der Spindel (3) übereinander liegen und
die Mutter (4) dazu konfiguriert ist, ohne Bewegung in Längsrichtung um die Spindel (3) zu rotieren, und die Spindel (3) dazu konfiguriert ist, sich ohne Rotation in Längsrichtung zu bewegen, oder
die Mutter (4) dazu konfiguriert ist, sich ohne Rotation um die Spindel (3) in Längsrichtung der Spindel (3) zu bewegen, und die Spindel (3) dazu konfiguriert ist, ohne Bewegung in ihrer Längsrichtung in der Mutter (4) zu rotieren, und
eine Verdrehsicherung aufweisend:
wenigstens ein Sicherungselement (2), das an einem Bewegungselement, welches dazu konfiguriert ist, sich ohne Rotation in Längsrichtung zu bewegen, vorgesehen ist und an wenigstens einer Stelle aus der Oberfläche des Bewegungselements in radialer Richtung nach außen hinausragt, wobei
die Spindel (3) dazu konfiguriert ist, als das Bewegungselement zu fungieren, wenn die Spindel (3) dazu konfiguriert ist, sich ohne Rotation in Längsrichtung zu bewegen, oder
die Mutter (4) dazu konfiguriert ist, als das Bewegungselement zu fungieren, wenn die Mutter (4) dazu konfiguriert ist, sich ohne Rotation um die Spindel (3) in Längsrichtung der Spindel (3) zu bewegen, und
wenigstens ein Führungselement (5), das eine Nut aufweist und das dazu konfiguriert ist, in einer Aussparung einer Einhausung (7) des Bewegungselements derart angeordnet zu sein, dass seine Nut im Wesentlichen parallel zur Längsachse des Bewegungseelements angeordnet ist, und den überstehenden Teil des Sicherungselementes (2) bei Längsbewegung des Bewegungselements in seiner Nut zu führen,
**dadurch gekennzeichnet, dass** das wenigstens eine Führungselement (5) so ausgebildet ist, dass es keinen Freiheitsgrad entlang der Längsachse der Nut, aber wenigstens den Rotationsfreiheitsgrad um eine Achse parallel zur Längsachse der Nut aufweist.

2. Kugelgewindetrieb gemäß einem der vorhergehenden Ansprüche, wobei die Anzahl der Führungselemente (5) der Anzahl der Stellen entspricht, an denen das wenigstens eine Sicherungselement (2) aus der Oberfläche des Bewegungselements in radialer Richtung hinausragt.

3. Kugelgewindetrieb gemäß einem der vorhergehenden Ansprüche, wobei der Querschnitt der Nut des wenigstens einen Führungselements (5) senkrecht zu ihrer Längsrichtung die gleiche Form aufweist, wie der Querschnitt senkrecht zur Längsrichtung des Bewegungselements des wenigstens einen in die Nut des Führungselementes (5) hineinragenden Endes des wenigstens einen Sicherungselements (2).

4. Kugelgewindetrieb gemäß einem der vorhergehenden Ansprüche, wobei im Falle mehrerer Führungselemente (5) diese über den Umfang des Bewegungselements gleichmäßig verteilt sind.

5. Kugelgewindetrieb gemäß einem der vorhergehenden Ansprüche, wobei das wenigstens eine Ende des wenigstens einen Sicherungselementes (2) das in die Nut des wenigstens einen Führungselementes (5) hineinragt einen senkrecht zur Längsrichtung des wenigstens einen Sicherungselements (2) verlaufenden kreisförmigen Querschnitt aufweist.

6. Kugelgewindetrieb gemäß einem der vorhergehenden Ansprüche, wobei das wenigstens eine Führungselement (5) in der Einhausung an seinen Enden in Längsrichtung gelagert ist, wobei die Lagerung dazu konfiguriert ist eine reibungsarme Rotation des Führungselements (5) um eine Achse parallel zur Längsachse des Bewegungselements zu ermöglichen und jede translatorische Bewegung des wenigstens einen Führungselements (5) zu verhindern.

7. Kugelgewindetrieb gemäß einem der vorhergehenden Ansprüche, wobei das wenigstens eine Führungselement (5) einen symmetrischen und bevorzugt einen kreisförmigen Querschnitt senkrecht zu seiner Längsrichtung aufweist.

8. Kugelgewindetrieb gemäß einem der vorhergehenden Ansprüche, wobei das wenigstens eine Führungselement (5) und die Aussparung der Einhausung im Wesentlichen die gleiche Querschnittsform senkrecht zu ihrer Längsrichtung aufweisen.

9. Kugelgewindetrieb gemäß einem der vorhergehenden Ansprüche, wobei ein Material des wenigstens einen Führungselements (5) und ein Material des wenigstens einen Sicherungselements (2) eine Materialpaarung ergeben, die bei Reibung zwischen den Materialien einen geringen Verschleiß und/oder einen geringen Reibwiderstand aufweist, wobei das Material des wenigstens einen Führungselements (5) ein bevorzugt hartes Material wie Stahl ist.

10. Kugelgewindetrieb gemäß einem der vorhergehenden Ansprüche, wobei der das Bewegungselement eine Einhausung aufweist, die mindestens das Bewegungselement umgibt und als Gehäuse dient, wobei das wenigstens eine Führungselement (5) in der Einhausung derart angeordnet ist, dass es auf der einen Seite an der Einhausung anstößt und auf anderen Seite mit einem Sicherungsring fixiert wird, sodass keine Bewegung in Längsrichtung des Führungselementes (5) möglich ist.

11. Kugelgewindetrieb gemäß einem der vorhergehenden Ansprüche, wobei die Nut des wenigstens einen Führungselements (5) einen symmetrischen Querschnitt in Längsrichtung der Nut aufweist.

12. Kugelgewindetrieb gemäß einem der vorhergehenden Ansprüche, wobei das Sicherungselement (2) an der wenigstens einen Stelle so weit in die Nut des wenigstens einen Führungselements (5) hineinragt, dass der Punkt des wenigstens einen Sicherungselementes (2), der mit einem der Seitenflächen der Nut bei einer Drehung des Sicherungselementes (2) mit der Nut in Kontakt kommt weiter entfernt ist von der Oberfläche des Bewegungselements als der Mittelpunkt des Querschnitts des Führungselements (5).

## Claims

1. Ball screw drive with anti-rotation safeguard having:
a spindle (3) with a raceway profile and defined outer diameter;
a nut (4) with a defined inner diameter, which is slightly larger than the outer diameter of the spindle (3);
at least two balls which are arranged between the nut (4) and the spindle (3) in their raceway profile, and are configured to allow a low-friction movement of the spindle (3) along a longitudinal direction of the nut (4),
wherein the center axes of the inner diameter of the nut (4) and the outer diameter of the spindle (3) are superimposed, and
the nut (4) is configured to rotate about the spindle (3) without movement in longitudinal direction, and the spindle (3) is configured to move without rotation in longitudinal direction, or
the nut (4) is configured to move without rotation about the spindle (3) in longitudinal direction of the spindle (3), and the spindle (3) is configured to rotate without movement in its longitudinal direction in the nut (4), and
having an anti-rotation safeguard:
at least one securing element (2), which is provided on a movement element, which is configured to move without rotation in longitudinal direction thereof and protrudes outwards from the surface of the movement element in radial direction at at least one point, wherein
the spindle (3) is configured to function as the movement element when the spindle (3) is configured to move without rotation in longitudinal direction, or
the nut (4) is configured to act as the movement element when the nut (4) is configured to move without rotation about the spindle (3) in longitudinal direction of the spindle (3), and
at least one guide element (5) which has a groove and which is configured to be arranged in a cutout of an enclosure (7) of the movement element such that its groove is arranged substantially parallel to the longitudinal axis of the movement element, and to guide the protruding part of the securing element (2) in its groove during longitudinal movement of the movement element,
**characterized in that** the at least one guide element (5) is formed such that it has no degree of freedom along the longitudinal axis of the groove, but at least the degree of freedom of rotation about an axis parallel to the longitudinal axis of the groove.

2. Ball screw drive according to any one of the preceding claims, wherein the number of guide elements (5) corresponds to the number of points at which the at least one securing element (2) protrudes from the surface of the movement element in radial direction.

3. Ball screw drive according to any one of the preceding claims, wherein the cross-section of the groove of the at least one guide element (5) perpendicular to its longitudinal direction has the same shape as the cross-section perpendicular to the longitudinal direction of the movement element of the at least one end of the at least one securing element (2) protruding into the groove of the guide element (5).

4. Ball screw drive according to any one of the preceding claims, wherein in the case of multiple guide elements (5) the latter are evenly distributed around the circumference of the movement element.

5. Ball screw drive according to any one of the preceding claims, wherein the at least one end of the at least one securing element (2) protruding into the groove of the at least one guide element (5) has a circular cross section perpendicular to the longitudinal direction of the at least one securing element (2).

6. Ball screw drive according to any one of the preceding claims, wherein the at least one guide element (5) is supported in the enclosure at its ends in longitudinal direction, wherein the support is configured to allow low-friction rotation of the guide element (5) about an axis parallel to the longitudinal axis of the movement element and to prevent any translational movement of the at least one guide element (5).

7. Ball screw drive according to any one of the preceding claims, wherein the at least one guide element (5) has a symmetrical and preferably a circular cross-section perpendicular to its longitudinal direction.

8. Ball screw drive according to any one of the preceding claims, wherein the at least one guide element (5) and the cutout of the enclosure have substantially the same cross-sectional shape perpendicular to their longitudinal direction.

9. Ball screw drive according to any one of the preceding claims, wherein a material of the at least one guide element (5) and a material of the at least one securing element (2) produce a material pairing, which exhibits low wear and/or low frictional resistance in the event of friction between the materials, the material of the at least one guide element (5) being a preferably hard material such as steel.

10. Ball screw drive according to any one of the preceding claims, wherein the movement element has an enclosure which surrounds at least the movement element and is used as a housing, wherein the at least one guide element (5) is arranged in the enclosure such that it abuts against the enclosure on one side and is fixed on the other side with a securing ring, so that no movement is possible in the longitudinal direction of the guide element (5).

11. Ball screw drive according to any one of the preceding claims, wherein the groove of the at least one guide element (5) has a symmetrical cross-section in the longitudinal direction of the groove.

12. Ball screw drive according to any one of the preceding claims, wherein the securing element (2) at the at least one point protrudes so far into the groove of the at least one guide element (5) that the point of the at least one securing element (2), which comes into contact with the groove with one of the side surfaces of the groove during a rotation of the securing element (2) is further away from the surface of the movement element than the center point of the cross-section of the guide element (5).

## Revendications

1. Vis à billes avec sécurité antirotation présentant :
une broche (3) avec un profil de gorge de roulement et un diamètre extérieur défini,
un écrou (4) avec un diamètre intérieur défini qui est légèrement plus grand que le diamètre extérieur de la broche (3),
au moins deux billes qui sont disposées entre l'écrou (4) et la broche (3) dans son profil de gorge de roulement et qui sont configurées pour permettre un mouvement à faible frottement de la broche (3) le long de la direction longitudinale de l'écrou (4),
dans laquelle les axes centraux du diamètre intérieur de l'écrou (4) et du diamètre extérieur de la broche (3) sont superposés et
l'écrou (4) est configuré pour tourner autour de la broche (3) sans mouvement dans la direction longitudinale, et la broche (3) est configurée pour se déplacer sans rotation dans la direction longitudinale, ou
l'écrou (4) est configuré pour se déplacer sans rotation autour de la broche (3) dans la direction longitudinale de la broche (3), et la broche (3) est configurée pour tourner sans mouvement dans sa direction longitudinale dans l'écrou (4), et
une sécurité antirotation présentant :
au moins un élément de fixation (2) qui est prévu sur un élément mobile configuré pour se déplacer sans rotation dans la direction longitudinale et fait saillie vers l'extérieur au niveau d'au moins un endroit de la surface de l'élément mobile dans la direction radiale, dans laquelle
la broche (3) est configurée pour agir comme l'élément mobile lorsque la broche (3) est configurée pour se déplacer sans rotation dans la direction longitudinale, ou
l'écrou (4) est configuré pour agir comme l'élément mobile lorsque l'écrou (4) est configuré pour se déplacer sans rotation autour de la broche (3) dans la direction longitudinale de la broche (3), et
au moins un élément de guidage (5) qui présente une rainure et qui est configuré pour être disposé dans un évidement d'une enceinte (7) de l'élément mobile de sorte que sa rainure soit disposée sensiblement parallèlement à l'axe longitudinal de l'élément mobile et pour guider la partie faisant saillie de l'élément de fixation (2) dans sa rainure lors d'un mouvement longitudinal de l'élément mobile,
**caractérisée en ce que** le au moins un élément de guidage (5) est conçu de sorte qu'il ne présente pas de degré de liberté le long de l'axe longitudinal de la rainure, mais présente au moins le degré de liberté de rotation autour d'un axe parallèle à l'axe longitudinal de la rainure.

2. Vis à billes selon l'une quelconque des revendications précédentes, dans laquelle le nombre d'éléments de guidage (5) correspond au nombre d'endroits auxquels le au moins un élément de fixation (2) fait saillie de la surface de l'élément mobile dans la direction radiale.

3. Vis à billes selon l'une quelconque des revendications précédentes, dans laquelle la section transversale de la rainure de l'au moins un élément de guidage (5) présente, perpendiculairement à sa direction longitudinale, la même forme que la section transversale perpendiculaire à la direction longitudinale de l'élément mobile de la au moins une extrémité de l'au moins un élément de fixation (2) faisant saillie dans la rainure de l'élément de guidage (5).

4. Vis à billes selon l'une quelconque des revendications précédentes, dans laquelle, si plusieurs éléments de guidage (5) sont présents, ceux-ci sont répartis uniformément sur la circonférence de l'élément mobile.

5. Vis à billes selon l'une quelconque des revendications précédentes, dans laquelle la au moins une extrémité de l'au moins un élément de fixation (2) qui fait saillie dans la rainure de l'au moins un élément de guidage (5) présente une section transversale circulaire perpendiculaire à la direction longitudinale de l'au moins un élément de fixation (2).

6. Vis à billes selon l'une quelconque des revendications précédentes, dans laquelle le au moins un élément de guidage (5) est stocké dans l'enceinte au niveau de ses extrémités dans la direction longitudinale, dans laquelle le stockage est configuré pour permettre une rotation à faible frottement de l'élément de guidage (5) autour d'un axe parallèle à l'axe longitudinal de l'élément mobile et pour empêcher tout mouvement translatoire de l'au moins un élément de guidage (5).

7. Vis à billes selon l'une quelconque des revendications précédentes, dans laquelle le au moins un élément de guidage (5) présente une section transversale symétrique, et de préférence circulaire, perpendiculairement à sa direction longitudinale.

8. Vis à billes selon l'une quelconque des revendications précédentes, dans laquelle le au moins un élément de guidage (5) et l'évidement de l'enceinte présentent sensiblement la même forme de section transversale perpendiculaire à la direction longitudinale.

9. Vis à billes selon l'une quelconque des revendications précédentes, dans laquelle un matériau de l'au moins un élément de guidage (5) et un matériau de l'au moins un élément de fixation (2) produisent une association de matériaux qui présente une faible usure et/ou une faible résistance au frottement en cas de frottement entre les matériaux, dans laquelle le matériau de l'au moins un élément de guidage (5) est un matériau de préférence dur comme l'acier.

10. Vis à billes selon l'une quelconque des revendications précédentes, dans laquelle l'élément mobile présente une enceinte qui entoure au moins l'élément mobile et sert de boîtier, dans laquelle le au moins un élément de guidage (5) est disposé dans l'enceinte de telle manière qu'il bute d'un côté contre l'enceinte et est fixé de l'autre côté par une bague d'arrêt, de sorte qu'aucun mouvement ne soit possible dans la direction longitudinale de l'élément de guidage (5).

11. Vis à billes selon l'une quelconque des revendications précédentes, dans laquelle la rainure de l'au moins un élément de guidage (5) présente une section transversale symétrique dans la direction longitudinale de la rainure.

12. Vis à billes selon l'une quelconque des revendications précédentes, dans laquelle l'élément de fixation (2) fait saillie aussi loin dans la rainure de l'au moins un élément de guidage (5) au niveau d'au moins un endroit de sorte que l'endroit de l'au moins un élément de fixation (2) qui entre en contact avec une des surfaces latérales de la rainure lors de la rotation de l'élément de fixation (2) avec la rainure se trouve plus loin de la surface de l'élément mobile que le point central de la section transversale de l'élément de guidage (5).
